# EUROPEAN PATENT APPLICATION

(11) **EP 3 263 943 A1**
(43) Date of publication of application: **03.01.2018**
(21) Application number: 16755576.2
(22) Date of filing: 24.02.2016
(51) Int. Cl.: F16D 65/12

(54) **METAL PLATE MOLDED OBJECT, REDUCED NOISE BRAKE DISC USING SAME, AND METHOD FOR MANUFACTURING METAL PLATE MOLDED OBJECT**

(30) Priority: 26.02.2015 SG 10201501444X
(71) Applicant: Sunstar Singapore Pte. Ltd., One-North 138543 (SG)
(72) Inventor: NAKATSUJI, Tsuyoshi, One-North 138543 (SG); METSUGI, Fumihiko, Takatsuki-shi Osaka 569-1195 (JP)
(74) Representative: Vossius & Partner Patentanwälte Rechtsanwälte mbB
(86) International application number: PCT/JP2016/055505
(87) International publication number: WO 2016/136832

(57) **Abstract**

To provide a metal plate molded article with high vibration damping functionality, a noise-reduction brake disc using the same, and a manufacturing method of a metal plate molded article.

A brake disc 20 is composed of a metal plate molded article including an inner member 31 composed of a metal plate and an outer member 32 composed of a metal plate and fitted onto the inner member 31, wherein a friction damping surface 30 is formed in press-contact with fitted surfaces of the inner member 31 and the outer member 32. The brake disc 20 includes a hub part 22 with a plurality of attachment holes 29 into which attachment bolts to a wheel are inserted, and an annular sliding part 21 with a sliding surface 21a with which a brake pad BP is brought into press-contact. The friction damping surface 30 is provided to surround the attachment holes 29 individually or collectively. The inner member 31 and the outer member 32 are formed inside and outside the friction damping surface 30.

## Description

### Technical Field

The present invention relates to a metal plate molded article, a noise-reduction brake disc using the same, and a manufacturing method of a metal plate molded article.

### Background Art

As brake discs for motorcycle, there have been widely commercialized a brake disc that includes a portion to be attached to a wheel and a portion sliding on a brake pad and is formed by subjecting one metal plate to press molding, and a so-called floating brake disc that includes an annular sliding disc with a sliding part with which a brake pad is brought into contact under pressure, a hub disc attached to the inside of the sliding disc, and a plurality of coupling means for coupling the both discs (for example, refer to Patent Documents 1 and 2).

At manufacture of a brake disc for motorcycles, the brake disc is put into mass production through the processes of design and various performance tests. However, as the result of the brake test on real vehicles, design change may need to be made due to generation of brake noise (brake judder) such as brake squeal at the test. The brake noise leads to deterioration of merchantability and is a critically important issue to be solved.

The brake noise-generating mechanism has not yet been clarified sufficiently. In the event of noise recognized from a brake disc in the design phase, the material or shape of the brake pad is changed, the shape, size, or position of pattern holes in the brake disc is changed, or the thickness of the brake disc is changed to control the noise.

Meanwhile, as a method for pressing a metal plate into shape, a progressive pressing technique has been widely utilized. There has been proposed a method for progressive pressing by which an article is once stamped out of a metal plate of material, and immediately the article is fitted back (pushed back) into the hole in the metal plate of material produced by the stamping, and then the article is extracted from the metal plate of material, thereby to improve the external shape and dimensions of the article (for example, refer to Patent Document 3).

### Citation List

### Patent Literatures

Patent Document 1: JP-A No. 2009-250325
Patent Document 2: JP-A No. 200-14190
Patent Document 3: JP-A No. 2005-297009

### Summary of Invention

### Technical Problem

When the material or shape of the brake pad is to be changed for prevention of brake noise, there is trouble making the design change if the manufacturer of the brake disc and the manufacturer of the brake pad are different. In addition, when the configuration of the brake disc is to be modified with a design change of pattern holes in the brake disc, the design of the entire brake disc needs to be changed. In this case, it takes time to achieve coordination between the manufacturer of the brake disc and the manufacturer of the motorcycles. Further, when the thickness of the brake disc is to be adjusted, the adjustable range is significantly narrowed due to requirements of the brake device, whereby the generation of noise cannot be eliminated.

In any case, there has not been developed so far any effective method for eliminating brake noise. Under the actual situations, design changes are made by trial and error to reduce brake noise.

An object of the present invention is to provide a metal plate molded article with high vibration damping functionality, a noise-reduction brake disc using the same, and a manufacturing method of a metal plate molded article.

### Solution to Problem

The inventor of the present invention has taken notice of the fact that, at manufacture of a brake disc, in the process of fabricating a sliding disc by stamping out of the center of a disc-shaped metal plate of material, when a defective stamped member fitted back (pushed back) into the sliding disc was dropped to the floor by mistake, the impact sound caused by the defective member was different from that caused by the metal plate of material dropped to the floor. The inventor has investigated the cause of the difference and then has completed the present invention.

The metal plate molded article according to the present invention includes an inner member composed of a metal plate and an outer member composed of a metal plate and fitted onto the inner member, wherein a friction damping surface is formed in press-contact with fitted surfaces of the inner member and the outer member.

In the metal plate molded article, the friction damping surface is formed in press-contact with the fitted surfaces of the inner member and the outer member. Thus, in the event of vibrations of the metal plate molded article, metal textures of the inner member and the outer member rub against each other on the friction damping surface to damp vibrations acting on the metal plate molded article. Accordingly, by forming products generating vibrations and noise, for example, power-transmitting members such as brake discs, clutch discs, sprockets, gears, and pulleys, from the metal plate molded article, it is possible to suppress or prevent generation of vibration and noise in an effective manner.

In a preferred embodiment, as the inner member and the outer member as described above, an inner member is stamped out of a metal plate by press molding, an outer member is composed of a stamped frame after the stamping of the inner member, and the inner member is fitted back into the outer member to form a friction damping surface in press-contact with the fitted surfaces of the inner member and the outer member. In this case, after the metal plate is stamped by a punch, when the punch is returned to the original position, the inner member can be fitted back into the outer member. This improves productivity of the metal plate molded article. In addition, the inner member can be effortlessly fitted back into the outer member in the proper position without any positional shift in a circumferential direction or a radial direction. This reduces variations in fitting pressure on the inner member and the outer member between the finished products.

The noise-reduction brake disc according to the present invention is composed of the metal plate molded article, and includes a hub part with a plurality of attachment holes into which attachment bolts to a wheel are inserted and an annular sliding part with a sliding surface with which the brake pad is brought into press-contact, wherein the friction damping surface is provided to surround the attachment holes individually or collectively, and the inner member and the outer member are formed inside and outside the friction damping surface.

In the noise-reduction brake disc, the friction damping surface is formed to surround the attachment holes individually or collectively. Thus, even when the vibrations of the brake disc during braking caused by the press-contact between the brake pad and the sliding part are transferred from the sliding part to the attachment holes of the hub part, the vibrations can be damped by the metal textures of the inner member and the outer member rubbing each other on the friction damping surface. This makes it possible to suppress or prevent generation of brake noise in an effective manner.

In a preferred embodiment, the friction damping surface is formed in an annular shape along the outer periphery of the hub part to surround all the attachment holes. The friction damping surface may be formed to surround the attachment holes individually. However, this complicates the mold structure. Thus, the friction damping surface is preferably formed in an annular shape along the outer periphery of the hub part to surround all the attachment holes.

In a preferred embodiment, to form the friction damping surface in an annular shape along the outer periphery of the hub part, a plurality of fit convexes is protruded toward the center from the inner peripheral edge of the outer member at circumferential spacing, and a plurality of fit concaves to fit with the fit convexes is provided at the outer peripheral edge of the inner member. In this case, the friction damping surface may be increased in length to improve the strength of fit between the inner member and the outer member. In addition, the concave-convex fit between the fit convexes and the fit concaves preferably receives relative rotation between the outer member and the inner member.

To form the friction damping surface in an annular shape to surround all the attachment holes, preferably, the inner member and the outer member are coupled without a difference in level, and coupling holes are formed in one or both of the inner member and the outer member on the inner side of the sliding surface relative to the brake pad, and coupling means for coupling between the inner member and the outer member are provided in the coupling holes. In this case, the inner member and the outer member can be coupled by the coupling means as well as the friction damping surface, thereby to further improve the strength of coupling between the inner member and the outer member.

The coupling means may be pin members or bolts. In a preferred embodiment, the attachment holes are formed as the coupling holes between the inner member and the outer member, and the attachment bolts are used to fasten the brake disc to the wheel and tighten together the inner member and the outer member, thereby to restrain relative movement between the inner member and the outer member in the thickness direction. In this case, the coupling means can be provided without the need to increase parts count of the brake disc.

In a preferred embodiment, the inner member and the outer member are coupled without a difference in level and the friction damping surface is provided across the sliding part and the hub part. In such a configuration, braking force acts on the inner member and the outer member, which preferably reduces force to the relative rotation between the both members during braking to prevent large force from acting on the friction damping surface.

In a preferred embodiment, when no coupling means are provided or the friction damping surface are not provided across the sliding part and the hub part, there may be made a difference in level between the surface of the inner member and the surface of the outer member. In this case, the vibration damping functionality can be preferably improved as compared to the case where the members are coupled without a difference in level. However, when the members are coupled with a difference in level, it is preferred to set the height of the friction damping surface to 20% or more of the thickness of the brake disc and set the difference in level to less than 80% of the thickness of the brake disc to ensure the sufficient strength of fit between the inner member and the outer member on the friction damping surface.

A first manufacturing method of a metal plate molded article according to the present invention is a manufacturing method of a metal plate molded article including an inner member composed of a metal plate and an outer member composed of a metal plate fitted onto the inner member, wherein the method includes stamping out the metal plate by press molding into the inner member and the outer member, and fitting the inner member back into the outer member to form a friction damping surface in press-contact with the fitted surfaces of the both members.

According to the first manufacturing method, it is possible to produce the metal plate molded article with high vibration damping functionality in an easy and efficient manner without deterioration of productivity, by performing a series of successive press operations of stamping out the metal plate by press molding to form the inner member and the outer member and then fitting part or all of the inner member back into the outer member. Specifically, it is possible to produce the metal plate molded article without deterioration of productivity by performing a series of successive press operations of stamping out the metal plate by a punch and fitting the inner member back into the outer member when the punch returns to the original position.

A second manufacturing method of a metal plate molded article according to the present invention is a manufacturing method of a metal plate molded article including an inner member composed of a metal plate and an outer member composed of a metal plate fitted onto the inner member, wherein the method includes producing the inner member and the outer member, fitting the outer member onto the inner member, and pressurizing one of the inner member and the outer member in the thickness direction to form a friction damping surface in press-contact with the fitted surfaces of the both members.

According to the second manufacturing method, it is possible to produce the metal plate molded article with high vibration damping functionality in an easy and efficient manner by producing the outer member and the inner member through machining works such as press molding and cutting operation, fitting the outer member onto the inner member, and pressurizing one of the inner member and the outer member in the thickness direction to form the friction damping surface in press-contact with the fitted surfaces of the both members.

According to the first and second manufacturing methods, in a preferred embodiment, the metal plate molded article is a brake disc for motorcycle, including a hub part with attachment holes for attachment bolts to a wheel and an annular sliding part with a sliding surface with which the brake pad is brought into press-contact. In such a configuration, it is possible to produce the brake disc that effectively suppress or prevent brake noise during braking in an easy and efficient manner. Besides, the metal plate molded article is also applicable to production of products generating vibration or noise, such as clutch discs, sprockets, gears, and pulleys, for example.

In a preferred embodiment, in the case of producing the brake disc, after formation of the friction damping surface, the sliding part is subjected to high-frequency hardening.

### Advantageous Effects of Invention

According to the metal plate molded article in the present invention, the friction damping surface is formed in press-contact with the fitted surfaces of the inner member and the outer member, and in the event of vibrations of the metal plate molded article, metal textures of the inner member and the outer member rub against each other on the friction damping surface to damp vibrations acting on the metal plate molded article. Accordingly, by forming products generating vibration and noise, for example, such as brake discs, clutch discs, sprockets, gears, and pulleys, from the metal plate molded article, it is possible to suppress or prevent generation of vibration and noise in an effective manner.

According to the noise-reduction brake disc in the present invention, the friction damping surface is formed to surround the attachment holes individually or collectively, and even when vibrations of the brake disc during braking generated by the press-contact between the brake pad and the sliding part are transferred from the sliding part to the attachment holes of the hub part, the metal textures of the inner member and the outer member rub against each other on the friction damping surface to damp the vibrations. This makes it possible to suppress or prevent generation of brake noise in an effective manner.

According to the first manufacturing method of a metal plate molded article in the present invention, it is possible to produce the metal plate molded article with high vibration damping functionality in an easy and efficient manner without deterioration of productivity, by performing a series of successive press operations of stamping out the metal plate by press molding to form the inner member and the outer member and then fitting part or all of the inner member back into the outer member.

According to the second manufacturing method of a metal plate molded article in the present invention, it is possible to produce the metal plate molded article with high vibration damping functionality in an easy and efficient manner by producing the outer member and the inner member through machining works such as press molding and cutting operation, fitting the outer member onto the inner member, and pressurizing one of the inner member and the outer member in the thickness direction to form the friction damping surface in press-contact with the fitted surfaces of the both members.

### Brief Description of Drawings

Fig. 1 is a longitudinal sectional view of a first metal plate molded body;
Fig. 2 is a longitudinal sectional view of a second metal plate molded body;
Figs. 3(a) to 3(c) are illustrative diagrams of a manufacturing method of the first metal plate molded body;
Fig. 4 is an illustrative diagram of a manufacturing method of the second metal plate molded body;
Fig. 5 is an illustrative diagram of a manufacturing method of the first metal plate molded body in another configuration;
Fig. 6 is an illustrative diagram of a manufacturing method of the second metal plate molded body in another configuration;
Fig. 7(a) is a front view of a brake disc, Fig. 7(b) is a cross sectional view of Fig. 7(a) taken along line b-b;
Figs. 8(a) to 8(d) are illustrative diagrams of a manufacturing method of the brake disc;
Fig. 9 is a front view of the brake disc in another configuration;
Fig. 10(a) is a front view of the brake disc in another configuration, and Fig. 10(b) is a cross sectional view of Fig. 10(a) taken along line b-b;
Fig. 11(a) is a front view of the brake disc in another configuration, and Fig. 11(b) is a cross sectional view of Fig. 11(a) taken along line b-b;
Fig. 12 is a front view of the brake disc in another configuration;
Fig. 13(a) is a front view of a brake disc in comparative example 1, and Fig. 13(b) is a front view of a brake disc in example 1; and
Figs. 14(a) to 14(c) are graphs representing relationships between vibration time and acceleration at a measurement point on the brake discs of the comparative example 1 and the examples 1 and 2.

### Description of Embodiments

Hereinafter, preferred embodiments for carrying out the present invention will be described with reference to the accompanying drawings.

First, a schematic configuration of a metal plate molded body in the present invention will be described.

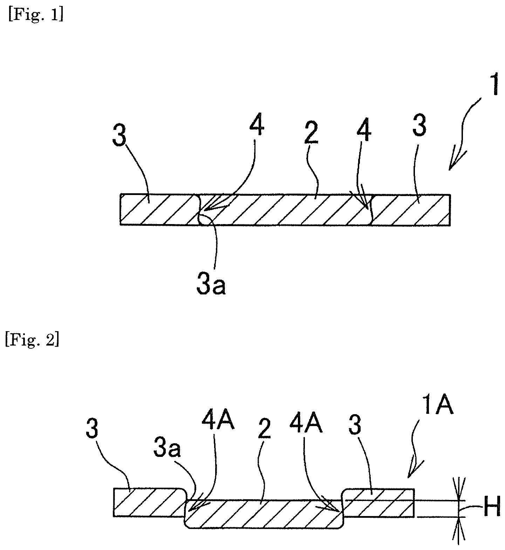

As illustrated in Figs. 1 and 2, the first metal plate molded body 1 includes an inner member 2 that is stamped out of a metal plate by press forming and an outer member 3 that is composed of a stamped frame after the stamping of the inner member 2. The inner member 2 is fitted back into the outer member 3 to form a friction damping surface 4 in press-contact with fitted surfaces of the inner member 2 and the outer member 3. The inner member 2 and the outer member 3 constitute a final product including various components.

The metal material for the first metal plate molded body 1 may be an arbitrary metal material capable of being subjected to press molding including a stamping process, for example, a ferrous metal material such as carbon steel or stainless steel, or a non-ferrous metal such as aluminum, copper, brass, or titanium.

The front shape of the first metal plate molded body 1 may be an arbitrary shape according to a final product. The thickness of the first metal plate molded body 1 is set to an arbitrary thickness allowing at least a stamping process according to a final product. The thickness of the first metal plate molded body 1 may be entirely uniform or may be partially different.

The friction damping surface 4 is formed in the shape of an endless annular band with a certain width along the thickness direction of the first metal plate molded body 1. The front shape of the friction damping surface 4 may be a circle, an ellipse, a polygon such as square or rectangle, multi-foil such as quatrefoil or octafoil, or any other arbitrary irregular shape. In addition, the first metal plate molded body 1 may be provided with a plurality of friction damping surface, and the inner member may be arranged on the inside of each of the friction damping surfaces. Further, the friction damping surface 4 is preferably formed to block a pathway for vibration transfer in the first metal plate molded body 1. For example, the friction damping surface 4 is preferably formed to divide a fixed side and a vibration-generating side by surrounding the fixed side portion or the vibration-generating side portion.

The inner member 2 is almost completely fitted back into a stamped hole 3a of the outer member 3. The surface of the inner member 2 and the surface of the outer member 3 are coupled flush with each other without a difference in level. Alternatively, as with a second metal plate molded body 1A illustrated in Fig. 2, part of the inner member 2 may be fitted back into the stamped hole 3a of the outer member 3 to form a difference in level according to a fit-back amount H between the surface of the inner member 2 and the surface of the outer member 3. The fit-back amount H in the second metal plate molded body 1A is set to be 20% or more of the thickness, preferably 50 % or more of the thickness, and more preferably 70% or more of the thickness. This is because, if the fit-back amount H is smaller than 20% of the thickness, the width of a friction damping surface 4A becomes less than 20% of the thickness to decrease the strength of fit between the inner member 2 and the outer member 3.

In the metal plate molded body 1 or 1A, the friction damping surface 4 or 4A is formed in press-contact with the fitted surfaces of the inner member 2 and the outer member 3. Thus, in the event of vibrations of the metal plate molded article, the metal textures of the inner member 2 and the outer member 3 rub against each other on the friction damping surface 4 or 4A to damp the vibrations acting on the metal plate molded article. Accordingly, by forming products generating vibration and noise, for example, power-transmitting members such as brake discs, clutch discs, sprockets, gears, and pulleys, from the metal plate molded article, it is possible to suppress or prevent generation of vibration and noise in an effective manner.

Next, a manufacturing method of the first metal plate molded body 1 will be described.

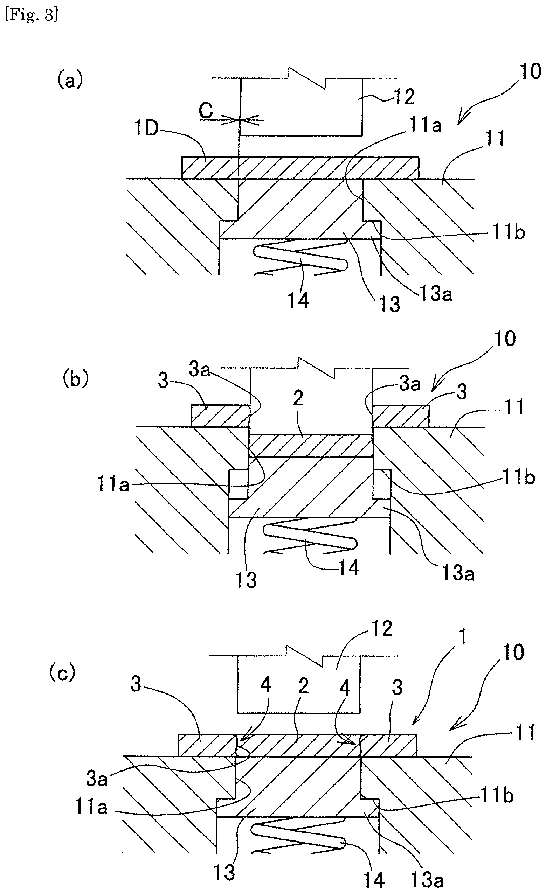

As illustrated in Fig. 3, a press metal mold 10 for use in the manufacturing method includes a die 11 with a die hole 11a for stamping out the inner member 2; a stamping punch 12 to be inserted into the die hole 11a with a steady clearance C; a pressing punch 13 attached to the die hole 11a in a manner capable of vertical movement; and a spring member 14 configured to bias constantly the pressing punch 13 in an upward direction. A position control protrusion part 13a is protruded outward from the outer periphery of the lower end of the pressing punch 13, such that the upper surface of the pressing punch 13 is flush with the upper surface of the die 11. A position control part 11b is formed in the die 11 to engage with the position control protrusion part 13a to control the upper limit position of the pressing punch 13.

To manufacture the first metal plate molded body 1 using the press metal mold 10, a metal plate of material 1D is first set on the die 11 as illustrated in Fig. 3(a). At that time, the position control part 11b controls upward movement of the pressing punch 13 to arrange the upper surface of the pressing punch 13 flush with the upper surface of the die 11.

Next, as illustrated in Fig. 3(b), the stamping punch 12 is lowered and the inner member 2 is stamped out by the outer peripheral edge of the lower end of the stamping punch 12 and the inner peripheral edge of the upper end of the die 11 to form the inner member 2 and the outer member 3 composed of the stamped frame after the stamping of the inner member 2. At that time, the inner member 2 is sandwiched between the stamping punch 12 and the pressing punch 13.

Next, as illustrated in Fig. 3(c), the stamping punch 12 is elevated and removed from the stamped hole 3a of the outer member 3. At that time, while being sandwiched between the stamping punch 12 and the pressing punch 13, the inner member 2 is moved upward together with the pressing punch 13 by biasing force of the spring member 14, and is fitted back into the stamped hole 3a of the outer member 3 and arranged flush with outer member 3 by the pressing punch 13, thereby to obtain the first metal plate molded body 1 in which the inner member 2 is fitted into the stamped hole 3a of the outer member 3.

According to the manufacturing method, it is possible to produce the metal plate molded article 1 with high vibration damping functionality in an easy and efficient manner without deterioration of productivity, by performing a series of successive press operations of stamping out the metal plate of material 1D by press molding to form the inner member 2 and the outer member 3 and then fitting the inner member 2 back into the outer member 3.

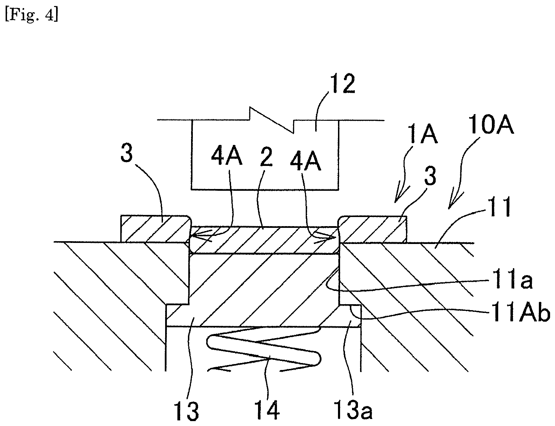

To manufacture the second metal plate molded body 1A, instead of the press metal mold 10, a press metal mold 10A is used in which a die 11A has a position control part 11Ab to control upward movement of the pressing punch 13 when the fit-back amount of the inner member 2 relative to the outer member 3 has reached a desired value, as illustrated in Fig. 4. In addition, as with the first metal plate molded body 1, while the metal plate of material 1D is set on the die 11A, the inner member 2 is stamped out by the stamping punch 12 to form the inner member 2 and the outer member 3 composed of the stamped frame after the stamping of the inner member 2, and then the stamping punch 12 is elevated to raise the inner member 2 together with the pressing punch 13 by biasing force of the spring member 14 until the position control protrusion part 13a of the pressing punch 13 abuts against the position control part 11Ab. Then, the inner member 2 is fitted back into the outer member 3 in such a manner as to protrude downward from the outer member 3, thereby to obtain the second metal plate molded body 1A.

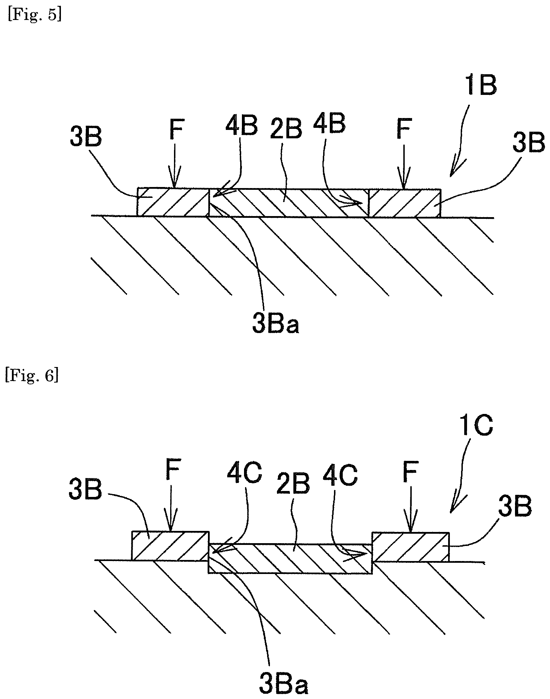

In each of the metal plate molded body 1 or 1A according to the foregoing embodiment, the inner member 2 is stamped out of the outer member 3 and then is fitted back into the stamped hole 3a of the outer member 3. Alternatively, as illustrated in Fig. 5, a first metal plate molded body 1B may be produced in such a manner that an inner member 2B and an outer member 3B fitted onto the inner member 2B are formed by press molding or machining work, the inner member 2B is fitted into a fitting hole 3Ba of the outer member 3B, and then one of the inner member 2B and the outer member 3B (the outer member 3B in Fig. 5) is pressurized in the thickness direction as indicated by arrows F to deform plastically the one of the inner member 2B and the outer member 3B in the direction orthogonal to the thickness direction, thereby forming a friction damping surface 4B in press-contact with the fitted surfaces of the both members. Alternatively, as illustrated in Fig. 6, a second metal plate molded body 1C may be produced in such a manner that the inner member 2B is fitted into the fitting hole 3Ba of the outer member 3B such that the inner member 2B protrudes downward from the outer member 3B, and then one of the inner member 2B and the outer member 3B (the outer member 3B in Fig. 6) is pressurized in the thickness direction as indicated by arrows F to deform plastically the one of the inner member 2B and the outer member 3B in the direction orthogonal to the thickness direction, thereby forming a friction damping surface 4C in press-contact with the fitted surfaces of the both members.

The metal plate molded bodies 1 and 1A to 1C are applicable to products from which vibrations and noise need to be damped, for example, power-transmitting members such as brake discs, clutch discs, sprockets, gears, and pulleys, and sound-insulating boards for various devices, and the like.

Next, a specific embodiment of the present invention applied to a brake disc will be described with reference to the accompanying drawings.

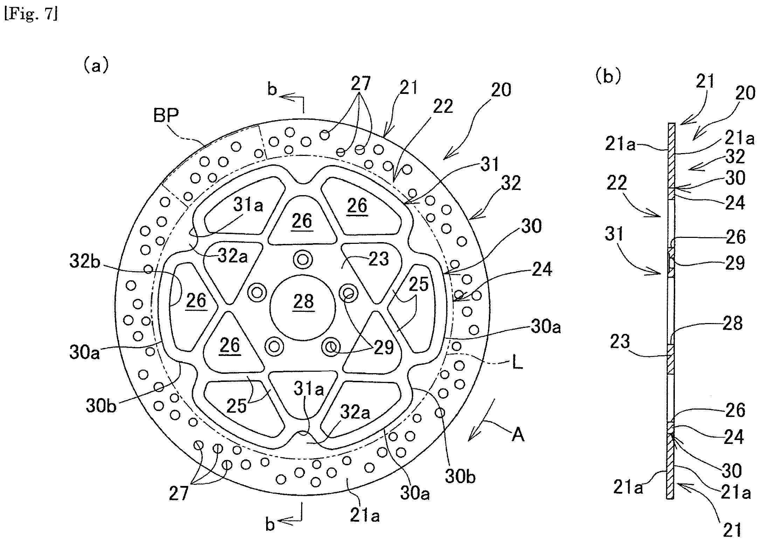

As illustrated in Fig. 7, a noise-reduction brake disc 20 is a brake disc for motorcycle, and includes an annular sliding part 21 with a sliding surface 21a on which a brake pad BP is slid, and a hub part 22 positioned on the inner peripheral side of the sliding part 21 (the inner side than an annular virtual boundary line L). The hub part 22 includes an attachment portion 23 to a wheel hub of a motorcycle, an annular ring portion 24 on the outer periphery connected to the sliding part 21, coupling portions 25 coupling the attachment portion 23 and the ring portion 24, a plurality of pattern holes 26 for weight reduction between the attachment portion 23 and the ring portion 24, and a plurality of small holes 27 for heat release and weight reduction in the sliding part 21. The brake disc 20 is configured to rotate together with the wheel of the motorcycle in a rotational direction indicated by an arrow A.

The brake disc 20 is produced by press-molding a flat metal plate composed of a stainless steel or a carbon steel with high wear resistance, and then subjecting the sliding part 21 to a heat treatment. The brake disc 20 illustrated in Fig. 7 is produced from a stainless steel plate 7 mm thick by press molding, the sliding part 21 and the hub part 22 of the brake disc 20 are set to be almost the same in thickness. The outer diameter of the brake disc 20 can be set as appropriate according to the configuration of the motorcycle. The outer diameter of the brake disc 20 illustrated in Fig. 7 is set to 300 mm. The sliding part 21 is slightly wider than the width of the brake pad BP.

The brake disc 20 illustrated in Fig. 7 has the sliding part 21 and the hub part 22 arranged flush with each other. Alternatively, depending on the configuration of the vehicle body, the sliding part 21 and the hub part 22 may be arranged in parallel planes with a specific spacing from each other along the thickness direction of the brake disc 20.

The attachment portion 23 and the ring portion 24 are coupled by twelve arm-shaped coupling portions 25, and the pattern holes 26 are defined and formed by the coupling portions 25 between the attachment portion 23 and the ring portion 24. The shapes and numbers of the coupling portions 25 and the pattern holes 26 can be set arbitrarily.

The sliding part 21 has the plurality of small holes 27 composed of round holes and arranged in a predetermined layout for heat release and weight reduction. Alternatively, the small holes 27 may be elongated slit-like holes or round holes with different diameters in a mixture. The diameter, shape, number, and layout of the small holes 27 can be set as appropriate taking into account the design of the brake disc 20 and the radiation performance of the sliding part 21.

The attachment portion 23 has at the center a core hole 28 into which an end portion of the wheel hub is inserted. The attachment portion 23 also has five attachment holes 29 around the core hole 28, into which the attachment bolts to the wheel hub are inserted. The number of the attachment holes 29 can be set as appropriate according to the number of the attachment bolt holes in the wheel hub.

Next, the friction damping surface 30 as a characteristic component of the present invention will be described. The components of the brake disc 20 except for the friction damping surface 30 are not limited to the configurations described above but can be configured in an arbitrary manner.

The friction damping surface 30 annular in a front view and having certain width along the disc thickness is provided at the ring portion 24 to surround the coupling portions 25, the pattern holes 26, and the attachment portion 23. The brake disc 20 is divided into an inner member 31 including the coupling portions 25 and the attachment portion 23 on the inner peripheral side of the friction damping surface 30 and an annular outer member 32 including the sliding part 21 on the outer peripheral side of the friction damping surface 30.

The outer member 32 has six fit convexes 32a protruded inward from the inner peripheral edge at peripheral spacing from each other. The inner member 31 has six fit concaves 31a to be fitted into the fit convexes 32a at peripheral spacing from each other on the outer peripheral edge. The friction damping surface 30 is composed of six arc portions 30a concentric to the brake disc 20, and six protrusions 30b serially connected to the arc portions 30a between the adjacent arc portions 30a along concave-convex fits between the fit convexes 32a and the fit concaves 31a. The friction damping surface 30 may be formed in a ring shape concentric to the sliding part 21. However, by providing the friction damping surface 30 with the plurality of protrusions 30b, it is possible to preferably increase the area of the friction damping surface 30 and improve the effect of vibration damping during braking, and it is also possible to preferably receive the force of relative rotational between the inner member 31 and the outer member 32 during braking by the concave-convex fit between the fit convexes 32a and the fit concaves 31a. The numbers of the fit convexes 32a and the fit concaves 31a can be set arbitrarily.

As with the first metal plate molded body 1 described above, the inner member 31 and the outer member 32 are divided into separate members on the friction damping surface 30 and are brought into press-contact with each other and integrated by fitting back through press molding or pressure application after the fitting. The friction damping surface 30 is composed of the outer peripheral surface of the inner member 31 and the inner peripheral surface of the outer member 32 to be fitted onto the inner member 31. The friction damping surface 30 traverses the pathway for vibration transfer during braking from the sliding part 21 to the wheel hub. The friction damping surface 30 is configured to damp vibrations acting on the brake disc 20 during braking by the metal textures of the outer peripheral surface of the inner member 31 and the inner peripheral surface of the outer member 32 rubbing against each other.

The friction damping surface 30 may be formed in an arbitrary front shape as far as the friction damping surface 30 traverses part or all of the pathway for vibration transfer from the sliding part 21 to the wheel hub. The friction damping surface 30 may be provided in an annular shape at a widthwise midway portion of the sliding part 21 to divide the sliding part 21 into the inner peripheral side and the outer peripheral side. The friction damping surface 30 may extend across the sliding part 21 and the hub part 22 to divide the sliding part 21 and the hub part 22 into the inner peripheral side and the outer peripheral side. The friction damping surface 30 may be provided in plural numbers concentric to the brake disc 20. The friction damping surface 30 may be formed at the attachment portion 23 to surround one or more attachment holes 29.

At the brake disc 20, the friction damping surface 30 is formed in press-contact with the fitted surfaces of the inner member 31 and the outer member 32. Accordingly, vibrations during braking can be damped by the metal textures of the inner member 31 and the outer member 32 rubbing against each other on the friction damping surface 30. This makes it possible to suppress or prevent generation of brake noise during braking.

Next, a manufacturing method of the brake disc 20 will be described.

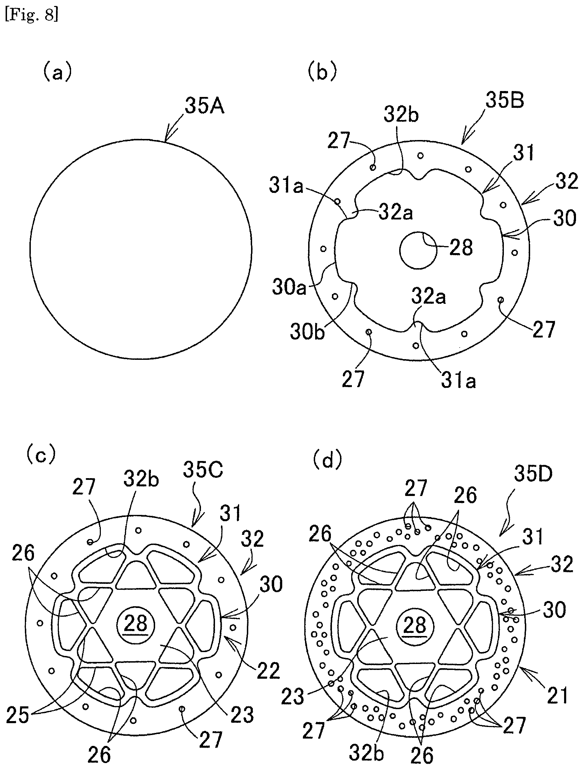

First, as illustrated in Fig. 8(a), a metal plate of material such as a stainless steel with a specific thickness is stamped into a disc-shaped molded body 35A in a size adapted to the outer diameter of the brake disc 20. Then, as illustrated in Fig. 8(b), a core hole 28 and small reference holes 27 are punched in the molded body 35A to form a molded body 35B. In addition, as with the first metal plate molded body 1, the inner member 31 is stamped out of the molded body 35B and then is fitted back to the stamped hole 32b of the outer member 32 such that the inner member 31 and the outer member 32 are flush with each other to form the friction damping surface 30 between the inner member 31 and the outer member 32. However, as with the second metal plate molded body 1A, the inner member 31 may be fitted back to the outer member 32 in such a manner that part of the inner member 31 is protruded from the outer member 32.

Next, as with the conventional brake disc, the pattern holes 26 are punched in the molded body 35B to form a molded body 35C as illustrated in Fig. 8(c). Then, the remaining small holes 27 are punched in the molded body 35C to form a molded body 35D as illustrated in Fig. 8(d). Then, the sliding part 21 in the molded body 35D is subjected to a hardening process such as high-frequency hardening, the both widthwise side edges of the outer peripheral surface and the inner peripheral surface of the molded body 35D are chamfered, and then the attachment holes 29 are cut. After that, the molded body 35D are subjected to necessary coating and polishing processes to obtain the brake disc 20.

According to the manufacturing method of the brake disc 20, it is possible to produce the brake disc 20 capable of suppressing or preventing generation of brake noise during braking in an easy and efficient manner without deterioration of productivity, by performing a series of successive press operations of stamping out the molded body 35A by press molding to form the inner member 31 and the outer member 32 and then fitting part or all of the inner member 31 back into the outer member 32.

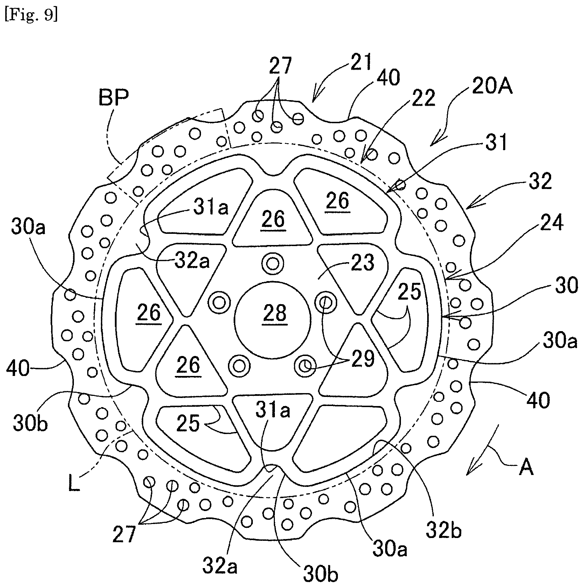

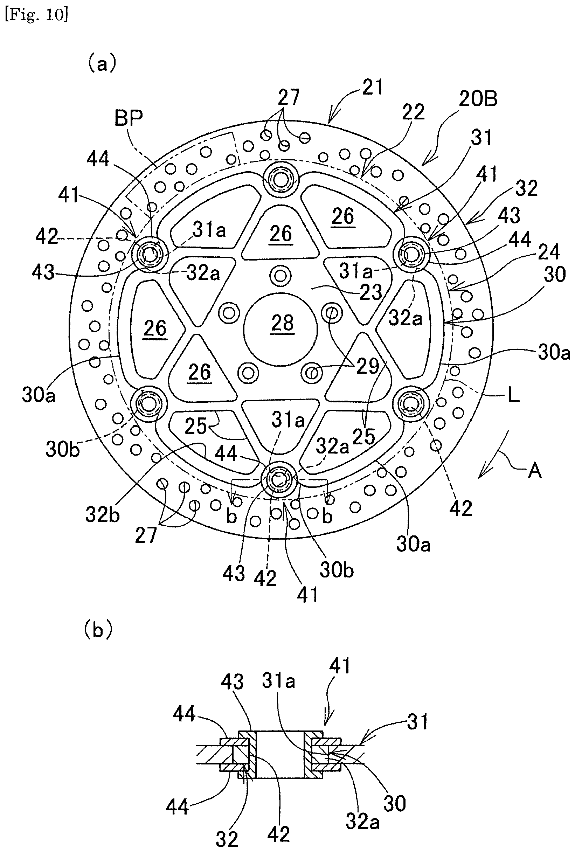

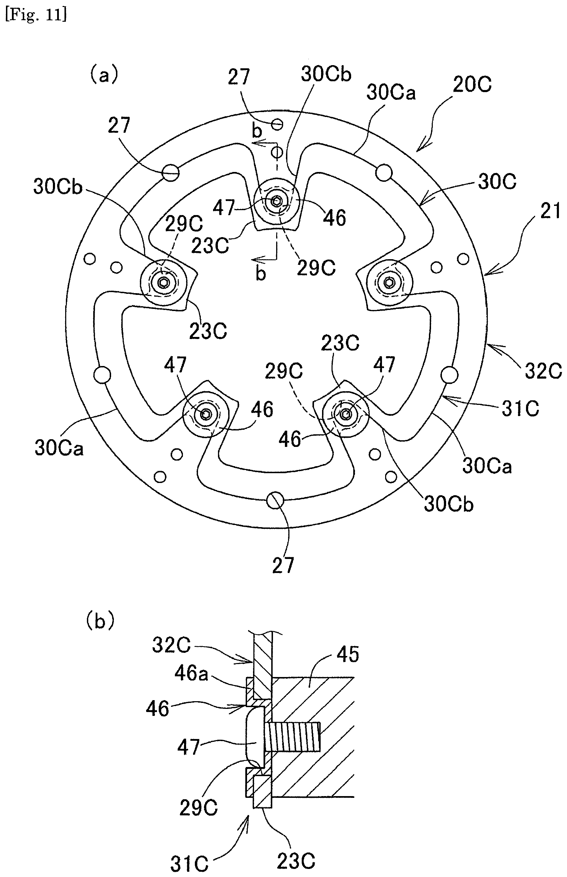

Next, another embodiment of the brake disc 20 with a partially modified configuration will be described. However, the same members as those of the brake disc 20 described above will be given the same reference numerals as those of the brake disc 20 described above, and detailed descriptions thereof will be omitted.
(1) As illustrated in Fig. 9, the present invention may be also applied to a brake disc 20A in which radially recessed arc-shaped concaves 40 are formed at the outer periphery at regular spacing in the circumferential direction. In this case, the manufacturing method includes the step of forming the concaves 40 by stamping out the outer periphery of a metal plate at regular spacing in the circumferential direction and the step of surface-pressing the both widthwise side edges of the outer peripheral edge of the metal plate with the concaves 40, between the step illustrated in Fig. 8(b) and the step illustrated in Fig. 8(c).
(2) The brake disc 20 is manufactured in such a manner that the inner member 31 is stamped out of the outer member 32 and then the inner member 31 is fitted back into the stamped hole 3a of the outer member 32. Alternatively, as with the first metal plate molded body 1B described above, the inner member 31 and the outer member 32 fitted onto the inner member 31 may be formed by press molding or machining work, the inner member 31 may be fitted into the fitting hole of the outer member 32, and then one of the inner member 31 and the outer member 32 is pressurized in the thickness direction to deform plastically the one of the inner member 31 and the outer member 32 in the direction orthogonal to the thickness direction, thereby forming the friction damping surface 30 in press-contact with the fitted surfaces of the both members. In addition, as with the second metal plate molded body 1C described above, the inner member 31 is fitted into the fitting hole of the outer member 32 such that the inner member 31 protrudes from the outer member 32, and then one of the inner member 31 and the outer member 32 is pressurized in the thickness direction to deform plastically the one of the inner member 31 and the outer member 32 in the direction orthogonal to the thickness direction, thereby forming the friction damping surface 30 in press-contact with the fitted surfaces of the both members. The machining work may be wire-saw, water-jet, and laser processing, and the like.
(3) As a brake disc 20B illustrated in Fig. 10, coupling means 41 may be provided at the concave-convex fit portions between the fit concaves 31a of the inner member 31 and the fit convexes 32a of the outer member 32 to control relative movement between the both members 31 and 32 in the thickness direction. Specifically, through holes 42 are formed in the fit convexes 32a of the outer member 32, and the coupling means 41 are each provided with a fixture 43 that is composed of a pin member or a bolt to be attached to the through hole 42, and a pair of washers 44 that is arranged on the both surfaces of the brake disc 20 and is extended over the inner member 31 at the outer peripheral portion. The inner member 31 and the outer member 32 are sandwiched by the fixtures 43 between the pairs of washers 44 to control relative movement between the both members 31 and 32 in the thickness direction.
(4) As illustrated in Fig. 11, the present invention may be applied to a brake disc 20C in which a plurality of attachment portions 23C is protruded inward at circumferential spacing from the inner periphery of the sliding part 21, instead of the hub part 22, and attachment holes 29C for the wheel hub are formed at the inner peripheries of the attachment portions 23C. In this case, as with the brake disc 20C of Fig. 11, instead of the friction damping surface 30, a friction damping surface 30C may be provided with: a plurality of arc portions 30Ca concentric to the sliding part 21 passing through the widthwise midway portion of the sliding part 21 at portions not corresponding to the attachment portions 23C; and protrusions 30Cb that are extended from the adjacent midway portions to the inner peripheral side of the attachment portions 23C and connected to the attachment holes 29C. In addition, an inner member 31C and an outer member 32C may be separately provided by the friction damping surface 30C, and the attachment holes 29C may be formed by the inner member 31C and the outer member 32C at the attachment portions 23C. In addition, bottomed fixtures 46 with flanges 46a may be attached to the attachment holes 29C and fixed with attachment bolts 47 to fixing portions 45 of the wheel hub to sandwich the inner member 31C and the outer member 32C between the flanges 46a of the fixtures 46 and the fixing portions 45 of the wheel hub and fix the brake disc 20C to the wheel hub, and the inner member 31C and the outer member 32C may be tightened together to control relative movement between the inner member 31C and the outer member 32C in the thickness direction. Accordingly, it is possible to preferably control relative movement between the inner member 31C and the outer member 32C in the thickness direction without the need to provide separate coupling means. In addition, the friction damping surface 30C is provided at the widthwise midway portion of the sliding part 21 to bring the brake pad BP into press-contact with the inner member 31C as well as the outer member 32C. Accordingly, it is possible to preferably reduce force to the relative rotation between the both members 32C and 31C during braking and prevent large force from acting on the friction damping surface 30C.

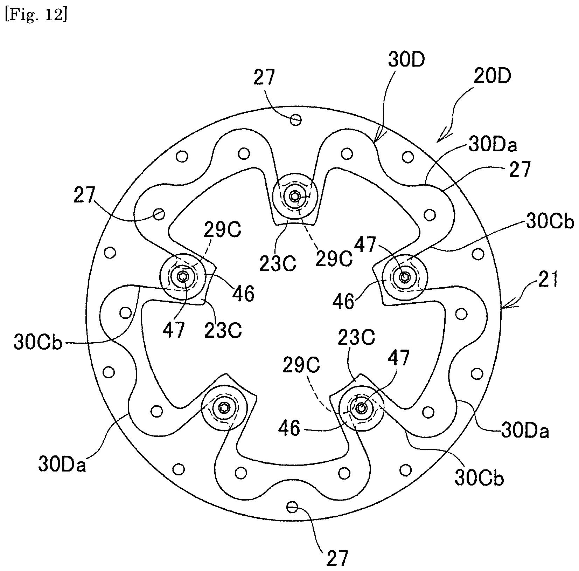

In the brake disc 20C, the arc-shaped portions 30Ca are formed. Alternatively, as illustrated in Fig. 12, for example, a brake disc 20D may be formed by providing a friction damping surface 30D with waveform portions 30Da, instead of the arc-shaped portions 30Ca and increasing the length of the friction damping surface 30D, which makes it possible to improve the effect of vibration damping by the friction damping surface 30D. The friction damping surface may be formed in any other arbitrary shape as far as it is annular.

Next, an evaluation test of brake discs will be described.

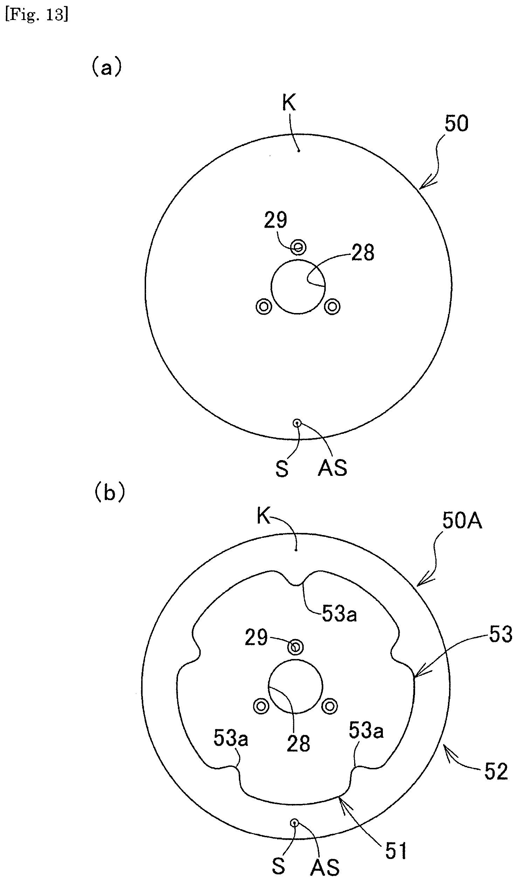

The following brake discs to be tested were prepared: a brake disc 50 of comparative example 1 having a core hole 28 with a diameter of 56 mm in the center of a stainless steel disc with a diameter of 320 mm and a thickness of 5 mm, and three attachment holes 29 with a diameter of 6.3 mm, as illustrated in Fig. 13(a); a brake disc 50A of example 1 in which an inner member 51 was stamped out of the brake disc 50 of the comparative example 1 and then was fitted back into an outer member 52 to be flush with each other, and a friction damping surface 53 was formed with five protrusions 53a of an outer diameter of 240 mm protruded inward at circumferential spacing, as illustrated in Fig. 13(b); and a brake disc of example 2 produced in the same manner as the example 1 except that the fit-back amount of the inner member 51 into the outer member 52 was set to 2.5 mm during production of the brake disc 50A of the example 1.

Then, the brake discs of the examples 1 and 2 and the comparative example 1 were subjected to hammering test as described below.

### (Hammering Test)

The brake disc was positioned concentric to the end portion of a horizontal fixed axis of a support stage, and was fixed by inserting three bolts into the attachment holes 29. Then, a vibration point K was set at the horizontally radial position passing through the center of the brake disc and located at 143 mm from the center, and a measurement point S was set at the position separated 180° from the vibration point K in the circumferential direction on a circumference of a circle passing through the vibration point K. Then, an acceleration sensor AS was provided facing the measurement point S.

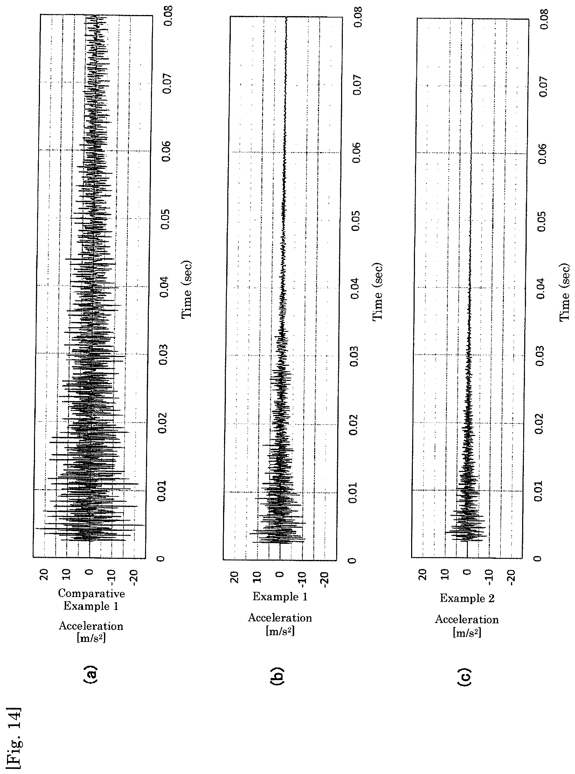

Then, an impact was made with a hammer on the vibration point K, and the acceleration of the brake disc relative to the thickness direction was measured with the acceleration sensor AS at the measurement point S. The results are presented in Figs. 14(a) to 14(c).

It can be seen from Fig. 14 that, in the examples 1 and 2, vibrations were damped in shorter times as compared with the comparative example 1. It can also be understood that the example 2 with the fit-back amount of 2.5 mm of the inner member 51 into the outer member 52 allowed vibrations to be damped in a shorter time as compared with the example 1 in which the inner member 51 was fitted back into the outer member 52 to be flush with each other.

As in the foregoing, preferred embodiments of the present invention are described. However, the present invention is not limited to the foregoing embodiments. The configuration of the present invention can be changed without deviating from the gist of the present invention.

### Reference Signs List

- 1: First metal plate molded body
- 2: Inner member
- 3: Outer member
- 3a: Stamped hole
- 4: Friction damping surface
- 1A: Second metal plate molded body
- 4A: Friction damping surface
- 1B: First metal plate molded body
- 2B: Inner member
- 3B: Outer member
- 3Ba: Fitting hole
- 4B: Friction damping surface
- 1C: Second metal plate molded body
- 4C: Friction damping surface
- 1D: Metal plate of material
- 10: Press metal mold
- 11: Die
- 11a: Die hole
- 11b: Position control part
- 12: Stamping punch
- 13: Pressing punch
- 13a: Position control protrusion part
- 14: Spring member
- 10A: Press metal mold
- 11A: Die
- 11Ab: Position control part
- 20: Brake disc
- 21: Sliding part
- 21a: Sliding surface
- 22: Hub part
- 23: Attachment portion
- 24: Ring portion
- 25: Coupling portion
- 26: Pattern hole
- 27: Small hole
- 28: Core hole
- 29: Attachment hole
- 30: Friction damping surface
- 30a: Arc portion
- 30b: Protrusion
- 31: Inner member
- 31a: Fit concave
- 32: Outer member
- 32a: Fit convex
- 32b: Stamped hole
- 35A: Molded body
- 35B: Molded body
- 35C: Molded body
- 35D: Molded body
- 20A: Brake disc
- 40: Concave
- 20B: Brake disc
- 41: Coupling means
- 42: Through hole
- 43: Fixture
- 44: Washer
- 20C: Brake disc
- 23C: Attachment portion
- 29C: Attachment hole
- 30C: Friction damping surface
- 30Ca: Arc portion
- 30Cb: Protrusion
- 31C: Inner member
- 32C: Outer member
- 45: Fixing portion
- 46: Fixture
- 46a: Flange
- 47: Attachment bolt
- 20D: Brake disc
- 30D: Friction damping surface
- 30Da: Waveform portion
- 50: Brake disc
- 50A: Brake disc
- 51: Inner member
- 52: Outer member
- 53: Friction damping surface
- 53a: Protrusion

## Claims

1. A metal plate molded article, comprising:
an inner member composed of a metal plate; and
an outer member composed of a metal plate and fitted onto the inner member, wherein
a friction damping surface is formed in press-contact with fitted surfaces of the inner member and the outer member.

2. The metal plate molded article according to claim 1, wherein
as the inner member and the outer member, an inner member is stamped out of a metal plate by press molding, an outer member is composed of a stamped frame after the stamping of the inner member, and
the inner member is fitted back into the outer member to form a friction damping surface in press-contact with fitted surfaces of the inner member and the outer member.

3. A noise-reduction brake disc composed of the metal plate molded article according to claim 1 or 2, comprising:
a hub part with a plurality of attachment holes into which attachment bolts to a wheel are inserted; and
an annular sliding part with a sliding surface with which a brake pad is brought into press-contact, wherein
the friction damping surface is provided to surround the attachment holes individually or collectively, and
the inner member and the outer member are formed inside and outside the friction damping surface.

4. The noise-reduction brake disc according to claim 3, wherein the friction damping surface is formed in an annular shape along an outer periphery of the hub part to surround all the attachment holes.

5. The noise-reduction brake disc according to claim 4, wherein
a plurality of fit convexes is protruded toward a center from an inner peripheral edge of the outer member at circumferential spacing, and
a plurality of fit concaves to fit with the fit convexes is provided at an outer peripheral edge of the inner member.

6. The noise-reduction brake disc according to any one of claims 3 to 5, wherein
the inner member and the outer member are coupled without a difference in level,
a coupling hole is formed in one or both of the inner member and the outer member on the inner side of the sliding surface relative to the brake pad, and
coupling means for coupling between the inner member and the outer member is provided in the coupling hole.

7. The noise-reduction brake disc according to claim 6, wherein the coupling means is a pin member or a bolt.

8. The noise-reduction brake disc according to claim 6, wherein
the attachment holes are formed as the coupling hole between the inner member and the outer member, and
the attachment bolts are used to fasten the brake disc to the wheel and tighten together the inner member and the outer member, thereby to restrain relative movement between the inner member and the outer member in the thickness direction.

9. The noise-reduction brake disc according to any one of claims 3 to 8, wherein
the inner member and the outer member are coupled without a difference in level, and
the friction damping surface is provided across the sliding part and the hub part.

10. The noise-reduction brake disc according to any one of claims 3 to 5, wherein there is a difference in level between the surface of the inner member and the surface of the outer member.

11. A manufacturing method of a metal plate molded article including an inner member composed of a metal plate and an outer member composed of a metal plate fitted onto the inner member, the method comprising:
stamping out the metal plate by press molding into the inner member and the outer member; and
fitting the inner member back into the outer member to form a friction damping surface in press-contact with fitted surfaces of the both members.

12. A manufacturing method of a metal plate molded article including an inner member composed of a metal plate and an outer member composed of a metal plate fitted onto the inner member, the method comprising:
producing the inner member and the outer member;
fitting the outer member onto the inner member; and
pressurizing one of the inner member and the outer member in the thickness direction to form a friction damping surface in press-contact with fitted surfaces of the both members.

13. The manufacturing method of a metal plate molded article according to claim 11 or 12, wherein the metal plate molded article is a brake disc for motorcycle that includes: a hub part with an attachment hole for an attachment bolt to a wheel; and an annular sliding part with a sliding surface with which a brake pad is brought into press-contact.

14. The manufacturing method of a metal plate molded article according to claim 13, wherein, after formation of the friction damping surface, the sliding part is subjected to high-frequency hardening.
